(19) Europäisches Patentamt / European Patent Office / Office européen des brevets

(11) **EP 4 024 527 A1**

(12) **EUROPEAN PATENT APPLICATION**
published in accordance with Art. 153(4) EPC

(43) Date of publication:
**06.07.2022 Bulletin 2022/27**

(21) Application number: **20936223.5**

(22) Date of filing: **30.10.2020**

(51) International Patent Classification (IPC):
**H01M 4/505** (2010.01) **H01M 4/62** (2006.01)

(52) Cooperative Patent Classification (CPC):
**Y02E 60/10**

(86) International application number:
**PCT/CN2020/125049**

(87) International publication number:
**WO 2021/232683 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2020 CN 202010421063**

(71) Applicant: SVOLT ENERGY TECHNOLOGY CO.,
LTD
Changzhou, Jiangsu 213200 (CN)

(72) Inventors:
• **SU, Xia**
hangzhou, Jiangsu 213200 (CN)

• **YANG, Hongxin**
hangzhou, Jiangsu 213200 (CN)
• **GAO, Xu**
hangzhou, Jiangsu 213200 (CN)
• **WANG, Daixing**
hangzhou, Jiangsu 213200 (CN)
• **LUO, Bisheng**
hangzhou, Jiangsu 213200 (CN)
• **MA, Rui**
hangzhou, Jiangsu 213200 (CN)

(74) Representative: **De Bonis, Paolo**
**Buzzi, Notaro & Antonielli d'Oulx S.p.A.**
**Corso Vittorio Emanuele II, 6**
**10123 Torino (IT)**

(54) **COBALT-FREE SYSTEM, POSITIVE ELECTRODE SLURRY, SLURRY HOMOGENIZATION METHOD THEREFOR, AND USE THEREOF**

(57) Provided are a cobalt-free system, a positive electrode slurry, a slurry homogenization method therefor, and the use thereof. The cobalt-free system comprises a cobalt-free material, a binder, a conductive agent and a pH regulator. The cobalt-free system can reduce the rebound degree of the viscosity of a slurry after leaving to stand to the same degree as that of a ternary 811 single crystal, and can also improve the stability of the coating surface density of the cobalt-free material to the same level as that of a ternary material.

Fig.1

EP 4 024 527 A1

**Description**

TECHNICAL FIELD

The present disclosure relates to the technical field of batteries, for example, a cobalt-free system, a positive electrode slurry, a slurry homogenization method therefor and use thereof.

BACKGROUND

With the depletion of conventional energy sources and increasingly prominent environmental problems, lithium-ion batteries receive more and more attention as a new type of clean energy source. More practical and efficient lithium-ion batteries are to be developed and studied.

Compared with other batteries, lithium-ion batteries have the advantages of a high energy density, a long cycle life, a high open-circuit voltage, no memory effect, being safe without pollution and the like. After more than 20 years of rapid development, lithium-ion batteries have been widely used in notebook computers, mobile phones, digital cameras, energy storage and other fields. In recent years, people are increasingly aware of environmental protection and the environmental pollution and global warming caused by automobile exhaust have drawn extensive attention. To resolve the environmental pollution and global warming caused by automobile exhaust and alleviate the energy crisis caused by increasingly reduced petroleum resources, the research, development and industrialization of energy-saving and environmental-friendly electric vehicles have become the concerns of the world. Compared with other mobile devices, electric vehicles impose higher requirements on the performance of batteries, such as a cycle life, consistency, a large current discharge capability and the like.

Slurry homogenization is an important procedure for manufacturing lithium batteries in the industry of lithium batteries. The quality of a slurry determines the later coating and the final battery performance. At present, there are two positive electrode slurry homogenization processes for lithium-ion batteries. The first is referred to as a wet process: a solvent and a binder are stirred, next a conductive agent is added and stirred, and then an active substance is added and stirred so that a positive electrode slurry is prepared. This process has a very long preparation time and seriously affects production efficiency, the solid content of the slurry is relatively low, which easily causes poor stability of the slurry, and the slurry is easy to be layered after placed for a period of time. The second is referred to as a dry process: a binder, a conductive agent and an active substance are put into a homogenizer for dry mixing and stirring and then a solvent is added and stirred so that the positive electrode slurry is prepared. In this process, the binder is not easy to be dissolved in the solvent when stirred after dry mixing so that the slurry is difficult to disperse, with a poor dispersion effect, which affects the uniformity of the slurry.

At present, a cobalt-free material still belongs to a new material and corresponds to no suitable system and slurry homogenization process. A slurry prepared according to the existing system and homogenization process of a ternary material changes greatly in viscosity after standing, which is not conducive to the subsequent use.

Therefore, it is necessary to provide a slurry homogenization process applicable to a cobalt-free system.

SUMMARY

The present disclosure provides a cobalt-free system, a positive electrode slurry, a slurry homogenization method therefor and use thereof. The cobalt-free system can reduce the degree to which the viscosity of a slurry rebounds after standing so that the slurry reaches the same degree as a ternary 811 single crystal and improve the stability in the surface density of coating of a cobalt-free material so that the cobalt-free material reaches the same level as a ternary material, thereby ensuring the quality of a battery.

In an embodiment, the present disclosure provides a cobalt-free system. The cobalt-free system includes a cobalt-free material, a binder, a conductive agent and a pH adjusting agent.

The cobalt-free material, the binder, the conductive agent and the pH adjusting agent are used in coordination so that the cobalt-free system has relatively good dispersity and a relatively short swelling time when used in a slurry. The cobalt-free system can reduce the degree to which the viscosity of the slurry rebounds after standing so that the slurry reaches the same degree as a ternary 811 single crystal and improve the stability in the surface density of coating of the cobalt-free material so that the cobalt-free material reaches the same level as a ternary material.

In an embodiment, the cobalt-free material is $Li_xNi_yMn_zO_2$, where x is 1 to 1.1, y is 0.5 to 0.8, z is 0.2 to 0.5, and y + z = 1. For example, x may be 1, 1.01, 1.02, 1.03, 1.04, 1.05, 1.06, 1.07, 1.08, 1.09, 1.1, etc., y may be 0.5, 0.52, 0.55, 0.58, 0.6, 0.62, 0.65, 0.68, 0.7, 0.72, 0.75, 0.78, 0.8, etc., and z may be 0.2, 0.22, 0.25, 0.28, 0.3, 0.32, 0.35, 0.37, 0.4, 0.42, 0.45, 0.48, 0.5, etc.

In an embodiment, the cobalt-free material is $Li_xNi_{0.75}Mn_{0.25}O_2$, where x is 1 to 1.1.

In an embodiment, the binder is polyvinylidene fluoride with a number average molecular weight of 0.5-1.5 million, for example, 0.5 million, 0.6 million, 0.7 million, 0.8 million, 0.9 million, 1 million, 1.1 million, 1.2 million, 1.3 million, 1.4 million, 1.5 million, etc. In this embodiment, polyvinylidene fluoride with a low molecular weight is used as the binder so that the binder has relatively good dispersity and a relatively short swelling time.

In an embodiment, the binder is added in an amount of 1-1.8 parts by weight based on the cobalt-free material added in an amount of 95.4-97.8 parts by weight. For example, the cobalt-free material may be added in an amount of 95.4 parts by weight, 95.8 parts by weight, 96 parts by weight, 96.2 parts by weight, 96.5 parts by weight, 96.8 parts by weight, 97 parts by weight, 97.2 parts by weight, 97.5 parts by weight, 97.8 parts by weight, etc., and the binder may be added in an amount of 1 part by weight, 1.1 parts by weight, 1.2 parts by weight, 1.3 parts by weight, 1.4 parts by weight, 1.5 parts by weight, 1.6 parts by weight, 1.7 parts by weight, 1.8 parts by weight, etc.

In an embodiment, the conductive agent includes a combination of a first conductive agent and a second conductive agent, where the first conductive agent is conductive carbon black and the second conductive agent is a single-wall carbon nanotube.

The single-wall carbon nanotube has a better conductive effect than a carbon nanotube. The single-wall carbon nanotube can not only compensate for poor conductivity of the cobalt-free material but also reduce an addition amount of the single-wall carbon nanotube, providing more uniform dispersion.

In an embodiment, the first conductive agent is added in an amount of 1-2 parts by weight and the second conductive agent is added in an amount of 0.2-0.8 parts by weight based on the cobalt-free material added in an amount of 95.4-97.8 parts by weight. For example, the cobalt-free material may be added in an amount of 95.4 parts by weight, 95.8 parts by weight, 96 parts by weight, 96.2 parts by weight, 96.5 parts by weight, 96.8 parts by weight, 97 parts by weight, 97.2 parts by weight, 97.5 parts by weight, 97.8 parts by weight, etc., the first conductive agent may be added in an amount of 1 part by weight, 1.1 parts by weight, 1.2 parts by weight, 1.3 parts by weight, 1.4 parts by weight, 1.5 parts by weight, 1.6 parts by weight, 1.7 parts by weight, 1.8 parts by weight, 1.9 parts by weight, 2 parts by weight, etc., and the second conductive agent may be added in an amount of 0.2 parts by weight, 0.3 parts by weight, 0.4 parts by weight, 0.5 parts by weight, 0.6 parts by weight, 0.7 parts by weight, 0.8 parts by weight, etc.

In an embodiment, the pH adjusting agent includes oxalic acid and/or maleic acid. In this embodiment, the pH adjusting agent can not only neutralize a high pH of the cobalt-free material but also absorb moisture to prevent the slurry from being agglomerated so that the slurry has more uniform dispersion.

In an embodiment, the pH adjusting agent is added in an amount of 0.1-0.5% by mass of total dry powder in the cobalt-free material, the binder and the conductive agent, for example, 0.1%, 0.12%, 0.15%, 0.17%, 0.2%, 0.22%, 0.25%, 0.27%, 0.3%, 0.32%, 0.35%, 0.38%, 0.4%, 0.42%, 0.45%, 0.47%, 0.5%, etc.

In an embodiment, the present disclosure provides a positive electrode slurry. The positive electrode slurry includes a colloidal solution and the preceding cobalt-free system dispersed in the colloidal solution.

In an embodiment, a method for preparing the colloidal solution includes carrying out glue making on a binder A and a solvent to obtain the colloidal solution.

In an embodiment, the glue making is carried out in a glue making machine for 200-300 min, for example, 200 min, 210 min, 220 min, 230 min, 240 min, 250 min, 260 min, 270 min, 280 min, 290 min, 300 min, etc.

In an embodiment, the binder A is polyvinylidene fluoride with a number average molecular weight of 0.5-1.5 million, for example, 0.5 million, 0.6 million, 0.7 million, 0.8 million, 0.9 million, 1 million, 1.1 million, 1.2 million, 1.3 million, 1.4 million, 1.5 million, etc.

In an embodiment, the solvent includes any one or a combination of at least two of N-methylpyrrolidone, N, N-dimethylformamide or dimethylsulfoxide.

In an embodiment, the binder A is added in an amount of 5-20 parts by weight based on the solvent added in an amount of 80-95 parts by weight. For example, the solvent may be added in an amount of 80 parts by weight, 81 parts by weight, 82 parts by weight, 83 parts by weight, 84 parts by weight, 85 parts by weight, 86 parts by weight, 87 parts by weight, 88 parts by weight, 89 parts by weight, 90 parts by weight, 91 parts by weight, 92 parts by weight, 93 parts by weight, 94 parts by weight, 95 parts by weight, etc., and the binder A may be added in an amount of 5 parts by weight, 8 parts by weight, 10 parts by weight, 12 parts by weight, 15 parts by weight, 18 parts by weight, 20 parts by weight, etc.

In an embodiment, the present disclosure provides a slurry homogenization method of the preceding positive electrode slurry. The slurry homogenization method includes: adding and dispersing a cobalt-free system in a colloidal solution to obtain the positive electrode slurry.

In an embodiment, the slurry homogenization method includes the following steps:

(1) a binder, a first conductive agent and a pH adjusting agent in a cobalt-free system are added to a colloidal solution and mixed to obtain a conductive glue A;

(2) a second conductive agent in the cobalt-free system is added to the conductive glue A obtained in step (1) and mixed to obtain a conductive glue B; and

(3) a cobalt-free material in the cobalt-free system is added to the conductive glue B obtained in step (2) and mixed to obtain the positive electrode slurry.

In an embodiment, in step (1), the mixing is carried out through stirring, where the stirring has a linear speed of 15-16 m/s, for example, 15 m/s, 15.1 m/s, 15.2 m/s, 15.3 m/s, 15.4 m/s, 15.5 m/s, 15.6 m/s, 15.7 m/s, 15.8 m/s, 15.9 m/s, 16 m/s, etc., and the stirring lasts for 40-80 min, for example, 40 min, 45 min, 50 min, 55 min, 60 min, 65 min, 70 min, 75 min, 80 min, etc.

In an embodiment, in step (2), the mixing is carried out through stirring, where the stirring has a linear speed of 15-16 m/s, for example, 15 m/s, 15.1 m/s, 15.2 m/s, 15.3 m/s, 15.4 m/s, 15.5 m/s, 15.6 m/s, 15.7 m/s, 15.8 m/s, 15.9 m/s, 16 m/s, etc., and the stirring lasts for 40-80 min, for example, 40 min, 45 min, 50 min, 55 min, 60 min, 65 min, 70 min, 75 min, 80 min, etc.

In an embodiment, in step (3), the mixing is carried out through stirring, where the stirring has a linear speed of 19-20m/s, for example, 19 m/s, 19.1 m/s, 19.2 m/s, 19.3 m/s, 19.4 m/s, 19.5 m/s, 19.6 m/s, 19.7 m/s, 19.8 m/s, 19.9 m/s, 20 m/s, etc., and the stirring lasts for 100-140min, for example, 100 min, 102 min, 105 min, 107 min, 110 min, 112 min, 115 min, 117 min, 120 min, 122 min, 125 min, 127 min, 130 min, 132 min, 135 min, 137 min, 140 min, etc.

In an embodiment, the present disclosure provides a positive electrode pole piece. The positive electrode pole piece includes a positive electrode current collector and a slurry layer on an outer surface of the positive electrode current collector, where the slurry layer uses the preceding positive electrode slurry.

In an embodiment, the present disclosure provides a lithium-ion battery. The lithium-ion battery includes a positive electrode pole piece, a negative electrode pole piece and a separator, where the positive electrode pole piece is the preceding positive electrode pole piece.

BRIEF DESCRIPTION OF DRAWINGS

The drawings are used to provide a further understanding of technical solutions of the present disclosure, constitute a part of the description, explain the technical solutions of the present disclosure in conjunction with embodiments of the present application and do not limit the technical solutions of the present disclosure.

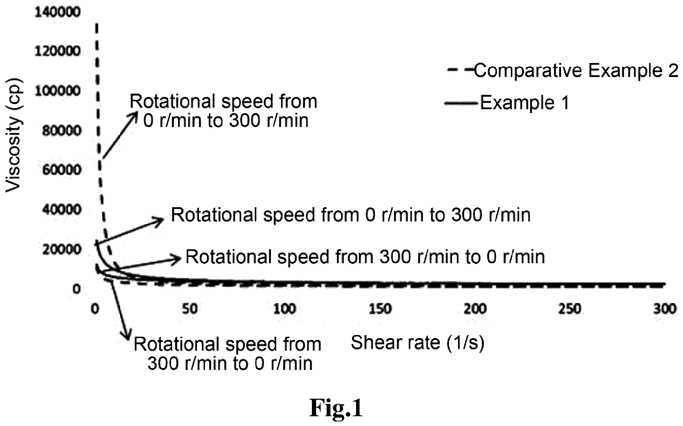

FIG. 1 shows curves of the viscosity of slurries varying with a shear rate, which are obtained in Example 1 and Comparative Example 2 of the present disclosure.

DETAILED DESCRIPTION

In an embodiment, the present disclosure provides a cobalt-free system. The cobalt-free system includes a cobalt-free material, a binder, a conductive agent and a pH adjusting agent. The cobalt-free material is $Li_xNi_yMn_zO_2$, where x is 1 to 1.1, y is 0.5 to 0.8, z is 0.2 to 0.5, and y + z = 1.

The cobalt-free system of the present disclosure can reduce the degree to which the viscosity of a slurry rebounds after standing. In some embodiments, the viscosity of the slurry before standing is 5260-6980cp and the viscosity of the slurry after 12 h of standing rebounds to 12120-14950cp so that the slurry reaches the same degree as a ternary 811 single crystal. Meanwhile, the cobalt-free system can improve the stability in the surface density of coating of the cobalt-free material. The surface density of coating fluctuates by as low as ±1.03% so that the cobalt-free material reaches the same level as a ternary material.

In an embodiment, the cobalt-free material is prepared by a method which includes steps described below.

In S100, a precursor $Ni_yMn_z(OH)_2$, a lithium source LiOH and a dopant are mixed under a stirring condition at a rate of 600-1000 rpm such as 600 rpm, 700 rpm, 800 rpm, 900 rpm or 1000 rpm for 10-40 min such as 10 min, 15 min, 20 min, 25 min, 30 min or 40 min, so that a mixture is obtained.

In an embodiment, a doping element in the dopant is selected from any one or a combination of at least two of Ti, Zr or Al, the dopant is doped in an amount of 2000-5000 ppm such as 2000 ppm, 2500 ppm, 3000 ppm, 4000 ppm, 4500 ppm or 5000 ppm, and a ratio of Li to a transition metal in the dopant is 1.04-1.06, such as 1.04, 1.05 or 1.06.

In S200, the mixture obtained in step S100 is subjected to primary calcination at an oxygen concentration of 90-100 vol%, where in the process of primary calcination, the temperature is raised to 930-950 °C at a rate of 1-4 °C/min and then maintained for 5-15 h so that a material after primary calcination is obtained.

In S300, the material after primary calcination, which is obtained in step S200, is pulverized and ground by a roller and sieved by a 325 mesh sieve so that a sieved material is obtained.

In S400, the sieved material obtained in step S300 is subjected to dry coating, where nano Zr and Al oxides (where the content of Zr is 0.1% to 0.3wt% and the content of Al is 0.1% to 0.2wt%) are mixed with the sieved material for 10-30 min such as 10 min, 15 min, 20 min or 30 min at a high temperature and at a rotational speed of 800-1200 rpm such as 800 rpm, 850 rpm, 900 rpm, 1000 rpm, 1100 rpm or 1200 rpm so that a coated material is obtained.

In S500, the coated material obtained in step S400 is subjected to secondary calcination, where the temperature is raised to 400-700 °C at a rate of 2-4 °C/min and maintained for 5-8 h so that a material after secondary calcination is obtained.

In S600, the material after secondary calcination, which is obtained in step S500, is sieved by a 325 mesh sieve or a 350 mesh sieve so that the cobalt-free material is obtained.

All the cobalt-free materials $LiNi_{0.75}Mn_{0.25}O_2$, $LiNi_{0.8}Mn_{0.2}O_2$ and $LiNi_{0.5}Mn_{0.5}O_2$ may be prepared by the preceding preparation method. Using $LiNi_{0.8}Mn_{0.2}O_2$ as an example, in an embodiment, a method for preparing $LiNi_{0.8}Mn_{0.2}O_2$ includes steps described below.

In S100, a precursor $Ni_{0.8}Mn_{0.2}(OH)_2$, a lithium source LiOH and a dopant (any one or a combination of at least two of Ti, Zr or Al, the dopant being doped in an amount of 5000 ppm, and a ratio of Li to a transition metal in the dopant being 1.06) are mixed under a stirring condition at a rate of 1000 rpm for 10 min so that a mixture is obtained.

In S200, the mixture obtained in step S100 is subjected to primary calcination at an oxygen concentration of 90%, where in the process of primary calcination, the temperature is raised to 950 °C at a rate of 2 °C/min and then maintained for 12 h so that a material after primary calcination is obtained.

In S300, the material after primary calcination, which is obtained in step S200, is pulverized and ground by a roller and sieved by a 325 mesh sieve so that a sieved material is obtained.

In S400, the sieved material obtained in step S300 is subjected to dry coating, where nano Zr and Al oxides (where the content of Zr is 0.2wt% and the content of Al is 0.1wt%) are mixed with the sieved material for 15 min at a high temperature and at a rotational speed of 1000 rpm so that a coated material is obtained.

In S500, the coated material obtained in step S400 is subjected to secondary calcination, where the temperature is raised to 500 °C at a rate of 3 °C/min and maintained for 6 h so that a material after secondary calcination is obtained.

In S600, the material after secondary calcination, which is obtained in step S500, is sieved by a 325 mesh sieve so that the cobalt-free material is obtained.

Example 1

This example provides a cobalt-free system, which includes 96.5 parts by weight of a cobalt-free material, 1.5 parts by weight of a binder, 1.5 parts by weight of a first conductive agent, 0.5 parts by weight of a second conductive agent and a pH adjusting agent (added in an amount of 0.3% by mass of dry powder in the cobalt-free material, the binder, the first conductive agent and the second conductive agent), where the cobalt-free material is $LiNi_{0.75}Mn_{0.25}O_2$, the binder is polyvinylidene fluoride with a number average molecular weight of 1 million, the conductive agent includes the first conductive agent and the second conductive agent, the first conductive agent is conductive carbon black, the second conductive agent is a single-wall carbon nanotube, and the pH adjusting agent is oxalic acid.

This example provides a positive electrode slurry, which includes a colloidal solution and the preceding cobalt-free system dispersed in the colloidal solution. A method for preparing the colloidal solution includes carrying out glue making on 90 parts by weight of N-methylpyrrolidone and 10 parts by weight of polyvinylidene fluoride with a number average molecular weight of 1 million in a glue making machine for 240 min to obtain the colloidal solution.

This example provides a slurry homogenization method of the positive electrode slurry, which includes steps described below.

(1) The binder, the first conductive agent and the pH adjusting agent in the cobalt-free system were added to the colloidal solution and mixed in a stirrer so that a conductive glue A was obtained, where the mixture was stirred at a linear speed of 15.7 m/s for 60 min.

(2) The second conductive agent in the cobalt-free system was added to the conductive glue A obtained in step (1) and mixed in the stirrer so that a conductive glue B was obtained, where the mixture was stirred at a linear speed of 15.7 m/s for 60 min.

(3) The cobalt-free material in the cobalt-free system was added to the conductive glue B obtained in step (2) and mixed in the stirrer so that the positive electrode slurry was obtained, where the mixture was stirred at a linear speed of 19.7 m/s for 120 min.

The viscosity of the slurry obtained in this example was tested. It was found that the viscosity of the slurry was 5660cp and rebounded to 13000cp after 12 h of standing. It can be seen that the viscosity of the slurry rebounds to a relatively small degree after 12 h of standing.

The slurry obtained in this example was coated on a positive electrode pole piece. A long pole piece with a length of 1 m was taken and samples were taken once every 20 cm and taken eight times so that 48 pieces of data were obtained in total. The surface density of coating was calculated based on the 48 pieces of data and fluctuated by ±1.03%. The fluctuation in surface density (SD) was calculated by the following formula:

$$SD = \frac{MAX(S_{MAX} - S_{AVE}, S_{AVE} - S_{MIN})}{S_{AVE}} \times 100\%;$$

where $S_{MAX}$ denotes a maximum value of the surface density of coating, $S_{AVE}$ denotes an average value of the surface density of coating, $S_{MIN}$ denotes a minimum value of the surface density of coating, and $MAX(S_{MAX} - S_{AVE}, S_{AVE} - S_{MIN})$ demotes a larger value between a difference between the maximum value and the average value and a difference between the average value and the minimum value.

Example 2

This example provides a cobalt-free system, which includes 95.4 parts by weight of a cobalt-free material, 1.8 parts by weight of a binder, 2 parts by weight of a first conductive agent, 0.8 parts by weight of a second conductive agent and a pH adjusting agent (added in an amount of 0.1% by mass of dry powder in the cobalt-free material, the binder, the first conductive agent and the second conductive agent), where the cobalt-free material is $Li_{1.1}Ni_{0.8}Mn_{0.2}O_2$, the binder is polyvinylidene fluoride with a number average molecular weight of 0.5 million, the conductive agent includes the first conductive agent and the second conductive agent, the first conductive agent is conductive carbon black, the second conductive agent is a single-wall carbon nanotube, and the pH adjusting agent is maleic acid.

This example provides a positive electrode slurry, which includes a colloidal solution and the preceding cobalt-free system dispersed in the colloidal solution. A method for preparing the colloidal solution includes carrying out glue making on 95 parts by weight of N-methylpyrrolidone and 5 parts by weight of polyvinylidene fluoride with a number average molecular weight of 0.5 million in a glue making machine for 200 min to obtain the colloidal solution.

This example provides a slurry homogenization method of the positive electrode slurry, which includes steps described below.

(1) The binder, the first conductive agent and the pH adjusting agent in the cobalt-free system were added to the colloidal solution and mixed in a stirrer so that a conductive glue A was obtained, where the mixture was stirred at a linear speed of 15 m/s for 80 min.

(2) The second conductive agent in the cobalt-free system was added to the conductive glue A obtained in step (1) and mixed in the stirrer so that a conductive glue B was obtained, where the mixture was stirred at a linear speed of 15 m/s for 80 min.

(3) The cobalt-free material in the cobalt-free system was added to the conductive glue B obtained in step (2) and mixed in the stirrer so that the positive electrode slurry was obtained, where the mixture was stirred at a linear speed of 19 m/s for 140 min.

The viscosity of the slurry obtained in this example was tested. It was found that the viscosity of the slurry was 5260cp and rebounded to 12770cp after 12 h of standing. It can be seen that the viscosity of the slurry rebounds to a relatively small degree after 12 h of standing.

The method for testing the surface density of coating in Example 1 was used for this example. It was found that the surface density of coating fluctuated by $\pm 1.05\%$.

Example 3

This example provides a cobalt-free system, which includes 97.8 parts by weight of a cobalt-free material, 1 part by weight of a binder, 1 part by weight of a first conductive agent, 0.2 parts by weight of a second conductive agent and a pH adjusting agent (added in an amount of 0.5% by mass of dry powder in the cobalt-free material, the binder, the first conductive agent and the second conductive agent), where the cobalt-free material is $LiNi_{0.5}Mn_{0.5}O_2$, the binder is polyvinylidene fluoride with a number average molecular weight of 1.5 million, the conductive agent includes the first conductive agent and the second conductive agent, the first conductive agent is conductive carbon black, the second conductive agent is a single-wall carbon nanotube, and the pH adjusting agent is oxalic acid.

This example provides a positive electrode slurry, which includes a colloidal solution and the preceding cobalt-free system dispersed in the colloidal solution. A method for preparing the colloidal solution includes carrying out glue making on 80 parts by weight of N-methylpyrrolidone and 20 parts by weight of polyvinylidene fluoride with a number average molecular weight of 1.5 million in a glue making machine for 300 min to obtain the colloidal solution.

This example provides a slurry homogenization method of the positive electrode slurry, which includes steps described below.

(1) The binder, the first conductive agent and the pH adjusting agent in the cobalt-free system were added to the colloidal solution and mixed in a stirrer so that a conductive glue A was obtained, where the mixture was stirred at a linear speed of 16 m/s for 40 min.

(2) The second conductive agent in the cobalt-free system was added to the conductive glue A obtained in step (1) and mixed in the stirrer so that a conductive glue B was obtained, where the mixture was stirred at a linear speed of 16 m/s for 40 min.

(3) The cobalt-free material in the cobalt-free system was added to the conductive glue B obtained in step (2) and mixed in the stirrer so that the positive electrode slurry was obtained, where the mixture was stirred at a linear speed of 20 m/s for 100 min.

The viscosity of the slurry obtained in this example was tested. It was found that the viscosity of the slurry was 6640cp and rebounded to 12120cp after 12 h of standing. It can be seen that the viscosity of the slurry rebounds to a relatively small degree after 12 h of standing.

The method for testing the surface density of coating in Example 1 was used for this example. It was found that the surface density of coating fluctuated by $\pm 1.306\%$.

Example 4

This example differs from Example 1 only in that the conductive agent in the cobalt-free system was only the first conductive agent, and other components and the preparation methods were the same as those of Example 1.

The viscosity of the slurry obtained in this example was tested. It was found that the viscosity of the slurry was 6230cp and rebounded to 12130cp after 12 h of standing. It can be seen that the viscosity of the slurry rebounds to a relatively small degree after 12 h of standing.

The method for testing the surface density of coating in Example 1 was used for this example. It was found that the surface density of coating fluctuated by ±1.446%.

As can be seen from the comparison of Example 1 and Example 4, when the cobalt-free system includes only the first conductive agent, the surface density of coating fluctuates to a relatively large degree.

Example 5

This example differs from Example 1 only in that the conductive agent was only the second conductive agent, and other components and the preparation methods were the same as those of Example 1.

The viscosity of the slurry obtained in this example was tested. It was found that the viscosity of the slurry was 6210cp and rebounded to 13250cp after 12 h of standing. It can be seen that the viscosity of the slurry rebounds to a relatively small degree after 12 h of standing.

The method for testing the surface density of coating in Example 1 was used for this example. It was found that the surface density of coating fluctuated by ±1.485%.

As can be seen from the comparison of Example 1 and Example 5, when the cobalt-free system includes only the second conductive agent, the surface density of coating fluctuates to a relatively large degree.

Example 6

This example differs from Example 1 only in that the single-wall carbon nanotube in the cobalt-free system was replaced with a carbon nanotube, and other components and the preparation methods were the same as those of Example 1.

The viscosity of the slurry obtained in this example was tested. It was found that the viscosity of the slurry was 6980cp and rebounded to 13260cp after 12 h of standing. It can be seen that the viscosity of the slurry rebounds to a relatively small degree after 12 h of standing.

The method for testing the surface density of coating in Example 1 was used for this example. It was found that the surface density of coating fluctuated by ±1.37%.

As can be seen from the comparison of Example 1 and Example 6, when the single-wall carbon nanotube is replaced with the carbon nanotube, the surface density of coating fluctuates to a relatively large degree.

Example 7

This example differs from Example 1 only in that the binder, polyvinylidene fluoride, had a number average molecular weight of 5 million, and other components and the preparation methods were the same as those of Example 1.

The viscosity of the slurry obtained in this example was tested. It was found that the viscosity of the slurry was 6350cp and rebounded to 14950cp after 12 h of standing. It can be seen that the viscosity of the slurry rebounds to a relatively small degree after 12 h of standing.

The method for testing the surface density of coating in Example 1 was used for this example. It was found that the surface density of coating fluctuated by ±1.32%.

As can be seen from the comparison of Example 1 and Example 7, when polyvinylidene fluoride with a high molecular weight is used as the binder, the viscosity of the slurry rebounds to a relatively small degree and the surface density of coating fluctuates to a relatively large degree.

Comparative Example 1

This example differs from Example 1 only in that the cobalt-free system included no pH adjusting agent, oxalic acid, and other components and the preparation methods were the same as those of Example 1.

The viscosity of the slurry obtained in this comparative example was tested. It was found that the viscosity of the slurry was 5630cp and rebounded to 47000cp after 12 h of standing. It can be seen that the viscosity of the slurry rebounds to a relatively large degree after 12 h of standing.

The method for testing the surface density of coating in Example 1 was used for this comparative example. It was found that the surface density of coating fluctuated by ±2.02%.

As can be seen from the comparison of Example 1 and Comparative Example 1, when the cobalt-free system includes no oxalic acid, the viscosity of the slurry rebounds to a relatively large degree and the surface density of coating fluctuates to a relatively large degree, which is not conducive to a practical application.

Comparative Example 2

This comparative example provides a slurry homogenization method, which includes steps described below.

(1) 6.25 parts by weight of polyvinylidene fluoride (with a number average molecular weight of 0.8 million) and 93.75 parts by weight of N-methylpyrrolidone were added to a glue making machine and subjected to glue making for 240 min so that a colloidal solution was obtained.

(2) 1.2 parts by weight of polyvinylidene fluoride (with a number average molecular weight of 0.8 million) and 0.7 parts by weight of carbon nanotubes were added to a stirrer and stirred so that a conductive glue 1 was obtained.

(3) 1.8 parts by weight of conductive carbon black and the conductive glue 1 obtained in step (2) were added to the stirrer and stirred so that a conductive glue 2 was obtained.

(4) 96.3 parts by weight of a cobalt-free material and the conductive glue 2 obtained in step (3) were added to the stirrer and stirred so that a slurry was obtained.

The viscosity of the slurry obtained in this comparative example was tested. It was found that the viscosity of the slurry was 6850cp and rebounded to 70000cp after 12 h of standing. It can be seen that the viscosity of the slurry rebounds to a relatively large degree after 12 h of standing.

The method for testing the surface density of coating in Example 1 was used for this comparative example. It was found that the surface density of coating fluctuated by ±2.28%.

As can be seen from the comparison of Example 1 and Comparative Example 2, when the slurry homogenization method of a ternary system is used, the viscosity of the obtained slurry rebounds to a relatively large degree and the surface density of coating fluctuates to a relatively large degree, which is not conducive to a practical application.

FIG. 1 shows curves of the viscosity of slurries obtained in Example 1 and Comparative Example 2 varying with a shear rate at different rotational speeds (a rotational speed from 0 r/min to 300 r/min and a rotational speed from 300 r/min to 0 r/min). As can be seen from FIG. 1, in Comparative Example 2, when the rotational speed changes from 0 r/min to 300 r/min, the viscosity of the slurry is 133000cp at 1 r/min, and when the rotational speed changes from 300 r/min to 0 r/min, the viscosity of the slurry is 10901cp at 1 r/min; in Example 1, when the rotational speed changes from 0 r/min to 300 r/min, the viscosity of the slurry is 24544cp at 1 r/min, and when the rotational speed changes from 300 r/min to 0 r/min, the viscosity of the slurry is 12311cp at 1 r/min. As can be seen from the comparison of Comparative Example 2 and Example 1, when the rotational speed changes from 300 r/min to 0 r/min, the viscosity of the slurry in Example 1 significantly decreases at 1 r/min and the area of a thixotropic ring (that is, an area between two viscosity curves for 0-300 r/min and 300-0 r/min) significantly decreases, which indicates that the slurry in Example 1 has stronger fluidity and a stronger ability to recover to an initial state and is more conducive to coating leveling. It indicates that the use of the cobalt-free system in Example 1 for slurry homogenization has a significant optimization and improvement effect.

## Claims

1. A cobalt-free system, comprising a cobalt-free material, a binder, a conductive agent and a pH adjusting agent.

2. The cobalt-free system according to claim 1, wherein the cobalt-free material is $Li_xNi_yMn_zO_2$, wherein x is 1 to 1.1, y is 0.5 to 0.8, z is 0.2 to 0.5, and y + z = 1.

3. The cobalt-free system according to claim 2, wherein the cobalt-free material is $Li_xNi_{0.75}Mn_{0.25}O_2$, wherein x is 1 to 1.1.

4. The cobalt-free system according to any one of claims 1 to 3, wherein the binder is polyvinylidene fluoride with a number average molecular weight of 0.5-1.5 million.

5. The cobalt-free system according to any one of claims 1 to 4, wherein the binder is added in an amount of 1-1.8 parts by weight based on the cobalt-free material added in an amount of 95.4-97.8 parts by weight.

6. The cobalt-free system according to any one of claims 1 to 5, wherein the conductive agent comprises a combination of a first conductive agent and a second conductive agent, wherein the first conductive agent is conductive carbon black and the second conductive agent is a single-wall carbon nanotube.

7. The cobalt-free system according to claim 6, wherein the first conductive agent is added in an amount of 1-2 parts by weight and the second conductive agent is added in an amount of 0.2-0.8 parts by weight based on the cobalt-free material added in an amount of 95.4-97.8 parts by weight.

8. The cobalt-free system according to any one of claims 1 to 7, wherein the pH adjusting agent comprises oxalic acid and/or maleic acid.

9. The cobalt-free system according to any one of claims 1 to 8, wherein the pH adjusting agent is added in an amount of 0.1-0.5% by mass of total dry powder in the cobalt-free material, the binder and the conductive agent.

10. A positive electrode slurry, comprising a colloidal solution and the cobalt-free system according to any one of claims 1 to 9, wherein the cobalt-free system is dispersed in the colloidal solution.

11. The positive electrode slurry according to claim 10, wherein a method for preparing the colloidal solution comprises carrying out glue making on a binder A and a solvent to obtain the colloidal solution.

12. The positive electrode slurry according to claim 11, wherein the glue making is carried out in a glue making machine for 200-300 min.

**13.** The positive electrode slurry according to claim 11 or 12, the binder A is polyvinylidene fluoride with a number average molecular weight of 0.5-1.5 million.

**14.** The positive electrode slurry according to any one of claims 11 to 13, wherein the solvent comprises any one selected from the group consisting of N-methylpyrrolidone, N,N-dimethylformamide, dimethylsulfoxide, and a combination of at least two selected therefrom.

**15.** The positive electrode slurry according to any one of claims 11 to 14, wherein the binder A is added in an amount of 5-20 parts by weight based on the solvent added in an amount of 80-95 parts by weight.

**16.** A slurry homogenization method of the positive electrode slurry according to any one of claims 10 to 15, comprising: adding and dispersing a cobalt-free system in a colloidal solution to obtain the positive electrode slurry.

**17.** The slurry homogenization method according to claim 16, comprising the following steps:

(1) a binder, a first conductive agent and a pH adjusting agent in a cobalt-free system are added to a colloidal solution and mixed to obtain a conductive glue A;
(2) a second conductive agent in the cobalt-free system is added to the conductive glue A obtained in step (1) and mixed to obtain a conductive glue B; and
(3) a cobalt-free material in the cobalt-free system is added to the conductive glue B obtained in step (2) and mixed to obtain the positive electrode slurry.

**18.** The slurry homogenization method according to claim 17, wherein in step (1), the mixing is carried out through stirring which has a linear speed of 15-16 m/s and lasts for 40-80 min.

**19.** The slurry homogenization method according to claim 17 or 18, wherein in step (2), the mixing is carried out through stirring which has a linear speed of 15-16 m/s and lasts for 40-80 min.

**20.** The slurry homogenization method according to any one of claims 17 to 19, wherein in step (3), the mixing is carried out through stirring which has a linear speed of 19-20m/s and lasts for 100-140 min.

**21.** A positive electrode pole piece, comprising a positive electrode current collector and a slurry layer on an outer surface of the positive electrode current collector, wherein the slurry layer uses the positive electrode slurry according to any one of claims 10 to 15.

**22.** A lithium-ion battery, comprising a positive electrode pole piece, a negative electrode pole piece and a separator, wherein the positive electrode pole piece is the positive electrode pole piece according to claim 21.

Fig.1

## INTERNATIONAL SEARCH REPORT

| | |
|---|---|
| International application No. | |
| | **PCT/CN2020/125049** |

**A. CLASSIFICATION OF SUBJECT MATTER**

H01M 4/505(2010.01)i; H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 正极, 镍锰酸锂, 浆料, 粘结剂, pvdf, 导电剂, 碳黑, 炭黑, 碳纳米管, pH调节, 草酸, 马来酸, positive, lithium, Li, nickel, Ni, manganese, Mn, slurry, binder, conductor, carbon, black, nanotube, oxalic, maleic

**C. DOCUMENTS CONSIDERED TO BE RELEVANT**

| Category* | Citation of document, with indication, where appropriate, of the relevant passages | Relevant to claim No. |
|---|---|---|
| PX | CN 111584861 A (SVOLT ENERGY TECHNOLOGY CO., LTD.) 25 August 2020 (2020-08-25) <br> description, paragraphs [0007]-[0041] | 1-22 |
| X | CN 108336300 A (SHENZHEN OPTIMUM BATTERY CO. LTD.) 27 July 2018 (2018-07-27) <br> description paragraphs 20-32, 49-55 | 1, 4-22 |
| Y | CN 108336300 A (SHENZHEN OPTIMUM BATTERY CO. LTD.) 27 July 2018 (2018-07-27) <br> description paragraphs 20-32, 49-55 | 2-22 |
| Y | CN 110137445 A (GUANGXI ZHUONENG NEW ENERGY TECHNOLOGY CO., LTD.) 16 August 2019 (2019-08-16) <br> description paragraphs 40-114 | 2-22 |
| Y | CN 109980224 A (TIANJIN LISHEN BATTERY JOINT-STOCK CO., LTD.) 05 July 2019 (2019-07-05) <br> description, paragraphs 34-67 | 8-22 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **28 January 2021** | **22 February 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/125049** |

**C.    DOCUMENTS CONSIDERED TO BE RELEVANT**

| Category* | Citation of document, with indication, where appropriate, of the relevant passages | Relevant to claim No. |
|---|---|---|
| X | CN 102185126 A (CITIC GUOAN MENGGULI POWER SOURCE TECHNOLOGY CO., LTD.) 14 September 2011 (2011-09-14)<br>    description, paragraphs 5-25 | 1, 4-22 |
| X | CN 111029581 A (FUNENG TECHNOLOGY (GANZHOU) CO., LTD.) 17 April 2020 (2020-04-17)<br>    description paragraphs 30-77 | 1, 4-22 |
| A | CN 109411716 A (SHENZHEN UTILITY POWER SOURCE CO., LTD.) 01 March 2019 (2019-03-01)<br>    entire document | 1-22 |
| A | US 2018226635 A1 (YUAN, Shi) 09 August 2018 (2018-08-09)<br>    entire document | 1-22 |

Form PCT/ISA/210 (second sheet) (January 2015)

**INTERNATIONAL SEARCH REPORT**
Information on patent family members

International application No.

**PCT/CN2020/125049**

| Patent document cited in search report | | | Publication date (day/month/year) | Patent family member(s) | | | Publication date (day/month/year) |
|---|---|---|---|---|---|---|---|
| CN | 111584861 | A | 25 August 2020 | None | | | |
| CN | 108336300 | A | 27 July 2018 | None | | | |
| CN | 110137445 | A | 16 August 2019 | None | | | |
| CN | 109980224 | A | 05 July 2019 | None | | | |
| CN | 102185126 | A | 14 September 2011 | CN | 102185126 | B | 01 June 2016 |
| CN | 111029581 | A | 17 April 2020 | None | | | |
| CN | 109411716 | A | 01 March 2019 | None | | | |
| US | 2018226635 | A1 | 09 August 2018 | None | | | |

Form PCT/ISA/210 (patent family annex) (January 2015)